# EUROPEAN PATENT APPLICATION

(11) **EP 0 773 631 A2**
(43) Date of publication of application: **14.05.1997**
(21) Application number: 96117770.6
(22) Date of filing: 06.11.1996
(51) Int. Cl.: H04B 1/16

(54) **Radio paging receiver**

(30) Priority: 09.11.1995 JP 291132/95
(71) Applicant: KOKUSAI ELECTRIC CO., LTD., Tokyo 164 (JP)
(72) Inventor: Takada, Toshio, Nakano-ku, Tokyo 164 (JP)
(74) Representative: Liesegang, Roland, Dr.-Ing.

(57) **Abstract**

In a radio paging receiver according to the present invention, a controlling portion (13) converts a received message into a code (operation code) that causes a piezoelectric transducer (17) to activate. The resultant code is stored in a memory (13a). The piezoelectric transducer (17) activates corresponding to an operation code stored in the memory (13a) with a playback request being input from an operating portion (18).

When the piezoelectric transducer (17) activates, a received message can be tactually output. Thus, a visually handicapped person can tactually perceive the content of the received message. Consequently, the visually handicapped person can effectively use the radio paging receiver.

## Description

### BACKGROUND OF THE INVENTION

### 1. Field of the Invention

The present invention relates to a radio paging receiver for use with for example radio paging services for sending signals (messages) from a base station to a plurality of mobile terminal receivers, in particular, to a radio paging receiver for tactually outputting a received message.

### 2. Description of the Related Art

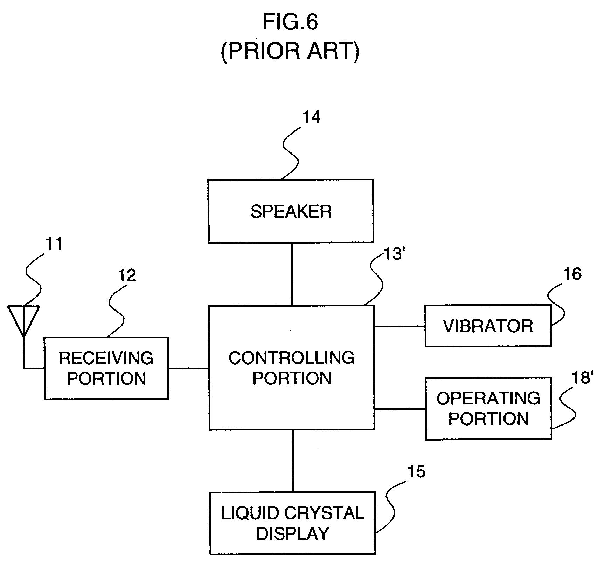

First of all, a conventional radio paging receiver (as a first prior art reference) will be described with reference to Fig. 6. Fig. 6 is a block diagram showing the structure of the conventional radio paging receiver.

As shown in Fig. 6, the conventional radio paging receiver comprises an antenna 11, a receiving portion 12, a controlling portion 13', a speaker 14, a liquid crystal display 15, a vibrator 16, and an operating portion 18'.

Next, each portion of the conventional radio paging receiver will be concretely described.

The antenna 11 receives a radio wave of radio paging services.

The receiving portion 12 detects and demodulates that radio wave received through the antenna 11 and then outputs a demodulated signal.

The speaker 14 generates a receiving sound for notifying the user of the radio paging receiver that a paging signal (message) addressed to the user has been received.

The vibrator 16 generates a vibration for notifying the user of the radio paging receiver that a paging signal (message) addressed to the user has been received.

The liquid crystal display 15 is a display portion that displays a received message addressed to the user.

The operating portion 18' is used to input a stop command that causes the receiving sound or vibration, which notifies the user that a paging signal addressed to the user has been received, to be stopped.

The controlling portion 13' controls the entire apparatus (hereinafter the radio paging receiver according to the prior art reference is sometimes referred to as the apparatus). In reality, when a received signal is addressed to the user, the controlling portion 13' activates the speaker 14 or the vibrator 16 so as to page the user. In addition, the controlling portion 13' displays a received message on the liquid crystal display 15.

Next, the operation of the conventional radio paging receiver will be described with reference to Fig. 6.

In the conventional radio paging receiver, the antenna 11 receives a radio wave. The receiving portion 12 detects and demodulates the received radio wave. The controlling portion 13' determines whether or not the received signal is addressed to the user. When the received signal is addressed to the user, the controlling portion 13' activates the speaker 14 and the vibrator 16 so as to page the user. When the stop command is input from the operating portion 18', the controlling portion 13' deactivates the speaker 14 and the vibrator 16 and displays the received message on the liquid crystal display 15.

Next, another radio paging receiver that is older than the above-described related art reference will be described as a second prior art reference. The radio paging receiver according to the second related art reference has only a paging function. In this radio paging receiver, when the user perceives a paging signal, the user should call a caller who paged the user with a public telephone at the nearest position so as to ask the caller for the reason.

However, when the user of the radio paging receiver according to the first related art reference is a visually handicapped person, the user cannot see a received message on the liquid crystal display 15. Thus, in this case, the user cannot use the message receiving function.

On the other hand, when a visually handicapped person uses only the paging function of the second related art reference or the first related art reference, after the user was paged, he or she should look for a communicating means such as a public telephone at the nearest position.

Examples of such radio paging receivers are described in Japanese Non-examined Patent Publication No.8-65745; Japanese Non-examined Utility Model Publication No.63-131430; and 64-40936.

### SUMMARY OF THE INVENTION

An object of the present invention is to provide a radio paging receiver that tactually outputs a received message so that a visually handicapped person can effectively use the radio paging receiver.

The present invention is a radio paging receiver for receiving a message signal addressed thereto, converting the message signal into a predetermined code that is tactually perceptible, converting the predetermined code into a tactually perceptible signal, and outputting the tactually perceptible signal so as to play back the message signal. Thus, since the message signal is tactually output, a visually handicapped person can perceive the content of the received message.

The present invention is a radio paging receiver, comprising a receiving means for receiving a message signal addressed to the radio paging receiver, a controlling means for converting the message signal into a predetermined code that is tactually perceptible, and a tactually perceiving means for converting the predetermined code into a tactually perceptible signal. Thus, since the message signal is tactually output, a visually handicapped person can perceive the content of the received message.

The tactually perceiving means is preferably a piezoelectric transducer for converting an electric signal into a mechanical pressure. Thus, an electric signal can be easily converted into a mechanical pressure. With a tactual output of the message signal, a visually handicapped person can perceive the content of the received message.

The controlling means preferably comprises a code table for converting a received message signal into a predetermined code that is tactually perceptible and a memory for storing the predetermined code that has been converted corresponding to the code table, wherein the controlling means is adapted for outputting as an electric signal the predetermined code stored in the memory to the tactually perceiving means when a playback command is input. Thus, a message signal can be easily converted into a predetermined code that is tactually perceptible. With the playback command, an electric signal can be output to the tactually perceiving means. With a tactual output of the message signal, a visually handicapped person can perceive the content of the received message.

The present invention is a radio paging receiver further comprising a notifying means for notifying the user of the radio paging receiver that a paging signal addressed to the user has been received, wherein the controlling means is adapted for determining whether the paging signal received from the receiving means has been addressed to the user of the radio paging receiver, activating the notifying means when the paging signal has been addressed to the user of the radio paging receiver, converting the received message signal into a predetermined code that is tactually perceptible, and outputting the predetermined code as an electric signal to the tactually perceiving means. With a tactual output of the message signal, a visually handicapped person can perceive the content of the received message.

These and other objects, features and advantages of the present invention will become more apparent in light of the following detailed description of a best mode embodiment thereof, as illustrated in the accompanying drawings.

### BRIEF DESCRIPTION OF THE DRAWINGS

Fig. 1 is a block diagram showing a structure of a radio paging receiver according to the present invention;
Fig. 2 is a schematic diagram for explaining an upper surface of the radio paging receiver according to the present invention;
Fig. 3 is a side view and a partial sectional view for explaining the radio paging receiver according to the present invention;
Fig. 4 is a flow chart showing a process of a controlling portion according to the present invention;
Fig. 5 is a schematic diagram showing examples of operation codes and operation signals for the radio paging receiver according to the present invention; and
Fig. 6 is a block diagram showing a structure of a conventional radio paging receiver.

### 〈Description of Reference Numerals〉

11 ... Antenna, 12 ... Receiving portion, 13, 13' ... Controlling portion, 14 ... Speaker, 15 ... Liquid crystal display, 16 ... Vibrator, 17 ... Piezoelectric transducer, 18, 18' ... Operating portion, 21 ... Casing of radio paging receiver, 22 ... Playback button, 23 ... Erase button, 24 ... Pad portion

### DESCRIPTION OF PREFERRED EMBODIMENT

Next, an embodiment according to the present invention will be described with reference to the accompanying drawings.

A radio paging receiver according to the present invention converts a received message into a code (operation code) for activating a piezoelectric transducer, stores the operation code, and activates the piezoelectric transducer corresponding to the stored operation code upon reception of a playback request. Thus, since the radio paging receiver tactually outputs a received message, even a visually handicapped person can tactually recognize the received message and effectively uses the radio paging receiver.

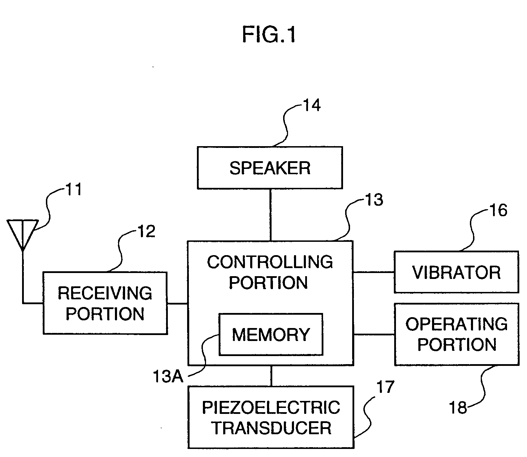

Next, the structure of the radio paging receiver according to the present invention will be described with reference to Fig. 1. Fig. 1 is a block diagram showing the structure of the radio paging receiver according to the present invention. For simplicity, in Fig. 1, similar portions to those in Fig. 6 are denoted by similar reference numerals.

As with the conventional radio paging receiver, the radio paging receiver according to the present invention comprises an antenna 11, a receiving portion 12, a controlling portion 13, a speaker 14, a vibrator 16, and an operating portion 18. In addition, as a feature portion of the present invention, the radio paging receiver according to the present invention (hereinafter sometimes referred to as the apparatus) includes a piezoelectric transducer 17 instead of the conventional liquid crystal display 15.

In addition, the operating portion 18 of the apparatus is different from that of the radio paging receiver according to the first related art reference. The controlling portion 13 of the apparatus is equipped with a memory 13A. The controlling method of the controlling portion 13 of the apparatus is different from that of the first related art reference.

The antenna 11 and the receiving portion 12 correspond to a receiving means in claims of the present invention. The piezoelectric transducer 17 corresponds to a tactual perceiving means of the claims. The controlling portion 13 corresponds to a controlling means of the claims. The operating portion 18 corresponds to an operating means of the claims. The speaker 14 and the vibrator 16 correspond to a notifying means of the claims. An operation code corresponds to a tactually perceptible code of the claims.

Next, each portion of the apparatus will be described in detail. However, for simplicity, the description of similar portions to the first related art reference are omitted.

The operating portion 18 inputs a stop command, a playback command, and an erase command. The stop command is used for stopping a receiving sound/vibration that causes the user to perceive a received signal. The playback command as a feature of the present invention is used for causing a received message to be played back. The erase command is used for causing a received message to be erased.

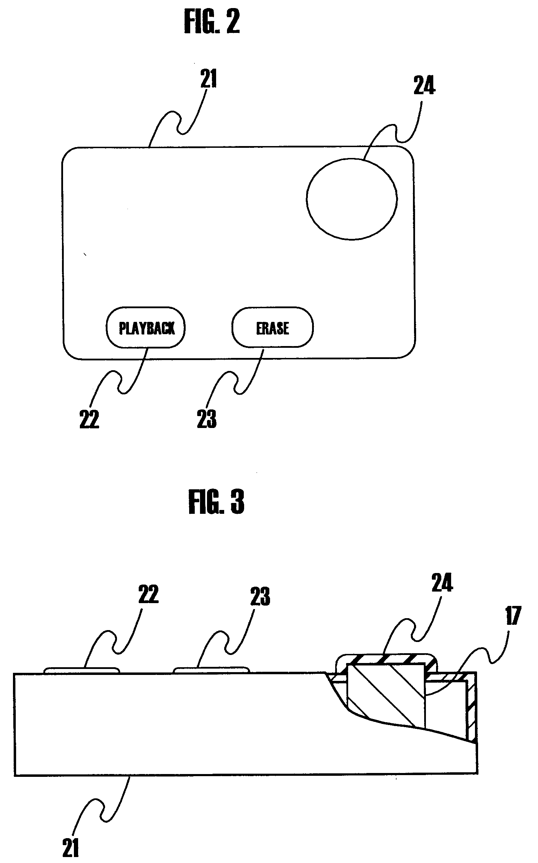

In reality, as shown in Fig. 2, a playback button 22 and an erase button 23 are disposed on the upper surface of a casing 21 of the apparatus. The playback button 22 is used for inputting the playback command. The erase button 23 is used for inputting the erase command. Fig. 2 is a schematic diagram showing the upper surface of the radio paging receiver according to the present invention. In Fig. 2, an input button corresponding to the stop command for stopping the received sound/vibration stop command is omitted.

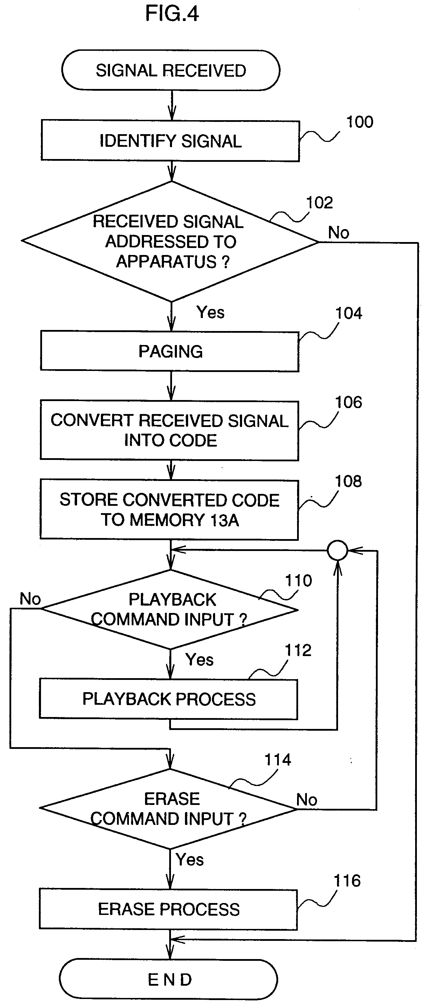

The piezoelectric transducer 17 generates a pressure vibration or an ultrasonic wave corresponding to an operation signal that is output from the controlling portion 13. As shown in Fig. 3, a pad portion 24 is disposed over the piezoelectric transducer 17. In addition, as shown in Fig. 2, the pad portion 24 is disposed on the upper surface of the casing 21 of the radio paging receiver 21. Fig. 3 is a side view and partial sectional view showing the radio paging receiver according to the present invention.

The controlling portion 13 controls the entire apparatus as with the first related art reference. However, as a feature of the present invention, the controlling portion 13 is equipped with the memory 13A. The memory 13A stores a code table representing the relation between character/numeric character codes (information codes) corresponding to received message data and operation codes of the piezoelectric transducer 17.

Next, with reference to Fig. 4, the controlling method of the controlling portion 13 will be described in detail. Fig. 4 is a flow chart showing a flow of the control process of the controlling portion 13 of the apparatus.

When the controlling portion 13 of the apparatus receives a signal from the receiving portion 12, it identifies a synchronous signal, an address signal, a message signal, and a phase compensation signals contained in the received signal (at step 100). The controlling portion 13 determines whether or not the content of the address signal accords with the address of the apparatus (namely, the received signal has been addressed to the apparatus) (at step 102). When the determined result at step 102 is No (namely, the received signal has not been addressed to the apparatus), the controlling portion 13 terminates the control process.

When the determined result at step 102 is Yes (namely, the received signal has been addressed to the apparatus), the controlling portion 13 activates the speaker 14 or the vibrator 16 so as to page the user (at step 104). The controlling portion 13 converts the content of the message signal into an operation code of the piezoelectric transducer 17 corresponding to the code table stored in the memory 13A (at step 106). The controlling portion 13 stores the resultant operation code in the memory 13A (at step 108).

The controlling portion 13 determines whether or not the playback command has been input from the operating portion 18 (at step 110). When the determined result is Yes (namely, the playback command has been input), the controlling portion 13 performs the playback process (at step 112). Thereafter, the flow returns to step 110. In the playback process, the controlling portion 13 reads an operation-code from the memory 13A, generates an operation signal corresponding to the operation code, and outputs the operation signal to the piezoelectric transducer 17.

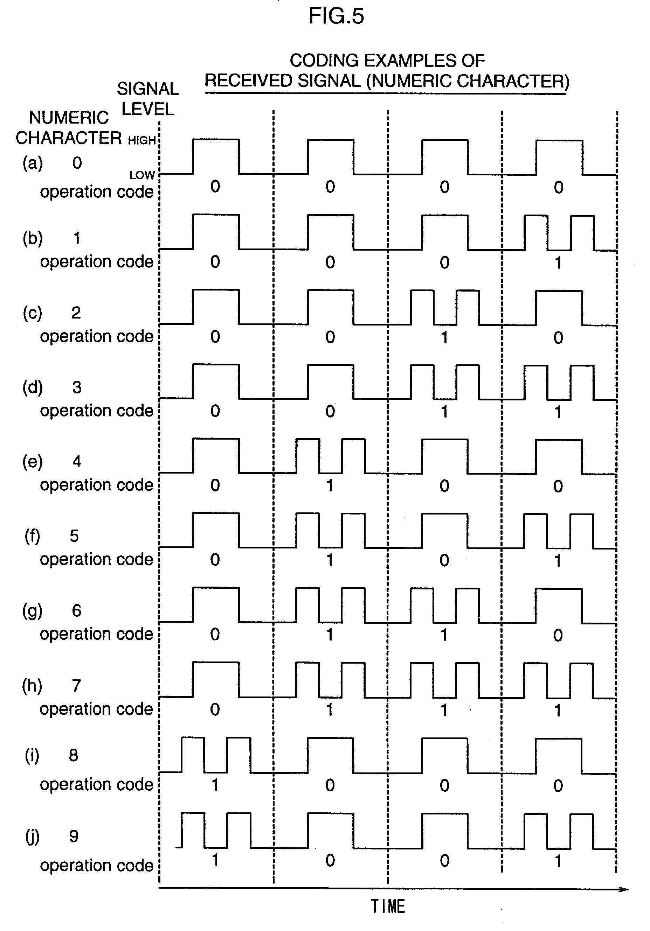

In reality, a character (numeric character) of a received message is represented with an operation code composed of a combination of one pulse whose signal level becomes high in a particular time period (this code is referred to as a code "0") and two pulses whose signal level becomes high in a particular time period (this code is referred to as a code "1"). For example, as shown in Fig. 5, numeric character 0 is represented by an operation code "0000", numeric character 1 by "0001", ..., and numeric character 9 by "1001". Fig. 5 is a schematic diagram for explaining examples of operation codes and operation signals for use with the radio paging receiver according to the present invention.

When the controlling portion 13 reads "0000" as an operation code in the playback process, the controlling portion 13 outputs an operation signal shown in Fig. 5(a) to the piezoelectric transducer 17. When the controlling portion 13 reads "1001" as an operation code, the controlling portion 13 outputs an operation signal shown in Fig. 5(j) to the piezoelectric transducer 17.

On the other hand, when the playback command has not been input at step process 110, the controlling portion 13 determines whether or not the erase command has been input from the operating portion 18 (at step 114). When the determined result at step 114 is No (namely, the erase command has not been input), the flow returns to step 110. When the determined result at step 114 is Yes (namely, the erase command has been input), the controlling portion 13 performs the erase process (at step 116). Thereafter, the controlling portion 13 completes the control process. In the erase process, the controlling portion 13 erases an operation code stored in the memory 13A.

The controlling portion 13 converts a message signal into a code (at step 106). Thereafter, the controlling portion 13 stores the converted code in the memory 13A (at step 108). However, the controlling portion 13 may directly store a message signal in the memory 13A and convert the message signal into a code upon reception of the playback command. However, when the playback process (at step 112) is repeated, it is preferable to convert a message signal to a code before stored in the memory 13A for quick and effective operations.

Next, the operation of the radio paging receiver according to the present invention will be described with reference to Fig. 1.

When the radio paging receiver according to the present invention receives a radio wave of a radio paging service through an antenna 11, the receiving portion 12 detects and demodulates a radio wave. When the controlling portion 13 has determined that the demodulated signal has been addressed to the apparatus, the controlling portion 13 activates the speaker 14 or the vibrator 16 to page the user. In addition, the controlling portion 13 converts the received message into an operation code corresponding to the code table and stores it in the memory 13A.

When the user presses the playback button of the operating portion 18, the playback command is input to the apparatus. Thus, the controlling portion 13 reads the operation code from the memory 13A, generate an operation signal corresponding to the operation code, and output the operation signal to the piezoelectric transducer 17. The piezoelectric transducer 17 activates corresponding to the operation signal and causes the user who touches the pad portion 24 to tactually perceive the received message.

When the user presses the erase button of the operating portion 18, the erase command is input to the apparatus. Thus, the controlling portion 13 erases the operation code stored in the memory 13A.

According to the radio paging receiver of the present invention, the received message is converted into an operation code of the piezoelectric transducer 17. The operation code is stored in the memory 13A. The operation code is read from the memory 13A corresponding to the playback command so as to generate and output an operation signal. With the operation code, the piezoelectric transducer 17 activates. Thus, since the received message can be tactually output, even a visually handicapped person can effectively use the apparatus.

In addition, according to the radio paging receiver of the present invention, since the communicating method performed between the base station and the radio paging receiver is the same as that of the first related art reference, a visually handicapped person can effectively use the apparatus without need to modily the base station.

Although the present invention has been shown and described with respect to a best mode embodiment thereof, it should be understood by those skilled in the art that the foregoing and various other changes, omissions, and additions in the form and detail thereof may be made therein without departing from the spirit and scope of the present invention.

## Claims

1. A radio paging receiver for receiving a message signal addressed thereto, converting said message signal into a predetermined code that is tactually perceptible, converting said predetermined code into a tactually perceptible signal, and outputting the tactually perceptible signal so as to play back said message signal.

2. A radio paging receiver, comprising:
receiving means (12) for receiving a message signal addressed to the radio paging receiver;
controlling means (13) for converting said message signal into a predetermined code that is tactually perceptible; and
tactually perceiving means for converting said predetermined code into a tactually perceptible signal.

3. The radio paging receiver as set forth in claim 2,
wherein said tactually perceiving means is a piezoelectric transducer (17) for converting an electric signal into a mechanical pressure.

4. The radio paging receiver as set forth in claim 2,
wherein said controlling means (13) comprises:
a code table for converting a received message signal into a predetermined code that is tactually perceptible; and
a memory (13a) for storing the predetermined code that has been converted corresponding to said code table,
wherein said controlling means (13) is adapted for outputting as an electric signal the predetermined code stored in said memory (13a) to said tactually perceiving means when a playback command is input.

5. The radio paging receiver as set forth in claim 4,
wherein said tactually perceiving means is a piezoelectric transducer (17) for converting an electric signal into a mechanical pressure.

6. The radio paging receiver as set forth in claim 5,
wherein the piezoelectric transducer (17) is adapted for converting an electric signal into a pressure vibration.

7. The radio paging receiver as set forth in claim 5,
wherein the piezoelectric transducer (17) is adapted for converting an electric signal into an ultrasonic wave.

8. The radio paging receiver as set forth in claim 4, further comprising:
operating means (18) for inputting a playback command.

9. The radio paging receiver as set forth in claim 2, further comprising:
notifying means (14,16) for notifying the user of the radio paging receiver that a paging signal addressed to the user has been received,
wherein said controlling means (13) is adapted for determining whether the paging signal received from said receiving means (12) has been addressed to the user of the radio paging receiver, activating said notifying means (14,16) when the paging signal has been addressed to the user of the radio paging receiver, converting the received message signal into a predetermined code that is tactually perceptible, and outputting the predetermined code as an electric signal to said tactually perceiving means.

10. The radio paging receiver as set forth in claim 4, further comprising:
notifying means (14,16) for notifying the user of the radio paging receiver that a paging signal addressed to the user has been received,
wherein said controlling means (13) is adapted for determining whether the paging signal received from said receiving means (12) has been addressed to the user of the radio paging receiver, activating said notifying means (14,16) when the paging signal has been addressed to the user of the radio paging receiver, converting the received message signal into a predetermined code that is tactually perceptible, and outputting the predetermined code as an electric signal to said tactually perceiving means corresponding to the playback command.

11. The radio paging receiver as set forth in claim 8, further comprising:
notifying means (14,16) for notifying the user of the radio paging receiver that a paging signal addressed to the user has been received,
wherein said controlling means (13) is adapted for determining whether the paging signal received from said receiving means (12) has been addressed to the user of the radio paging receiver, activating said notifying means (14,16) when the paging signal has been addressed to the user of the radio paging receiver, converting the received message signal into a predetermined code that is tactually perceptible, and outputting the predetermined code as an electric signal to said tactually perceiving means corresponding to the playback command that is input from said operating means (18).
